# EUROPÄISCHE PATENTSCHRIFT

(11) **EP 0 330 862 B1**
(45) Veröffentlichungstag und Bekanntmachung des Hinweises auf die Patenterteilung: **31.03.1993**
(21) Anmeldenummer: 89102003.4
(22) Anmeldetag: 06.02.1989
(51) Int. Cl.: B23K 11/02

(54) **Geregeltes Pressstumpfschweissverfahren und Vorrichtung zu seiner Durchführung**
Controlled pressure butt welding and apparatus therefor
Procédé de soudage réglé bout à bout par compression et dispositif pour sa réalisation

(30) Priorität: 27.02.1988 DE 3806246
(43) Veröffentlichungstag der Anmeldung: 06.09.1989
(73) Patentinhaber: MEYER, ROTH & PASTOR Maschinenfabrik GmbH, D-50968 Köln (DE)
(72) Erfinder: Exner, Karl-Christoph, D-5000 Köln 41 (DE); Reichow, Franz, D-5000 Köln 51 (DE); Becker, Horst, D-5000 Köln 51 (DE)
(74) Vertreter: König, Reimar, Dr.-Ing.

(56) Entgegenhaltungen:
- DE-A- 2 222 869
- DE-B- 2 457 180
- GB-A- 1 460 365
- GB-A- 1 527 640
- US-A- 4 419 558

## Beschreibung

Die Erfindung bezieht sich auf ein Preßstumpfschweißverfahren, insbesondere zum Verschweißen von aus Runddraht gebogenen Kettengliedern.

Allen Preßstumpfschweißverfahren gemeinsam ist, daß eine hohe Güte und gleichbleibende Qualität der Schweißungen gefordert wird. Dies gilt insbesondere in der Kettenfertigung, da ein einziges schlecht geschweißtes Kettenglied die Sicherheit der ganzen Kette gefährdet.

Bei herkömmlichen Preßstumpfschweißmaschinen, wie sie in der britischen Patentschrift 1 460 365 beschrieben sind, wird der sich in eine Aufwärm- und eine Stauchphase gliedernde Schweißvorgang sowohl in kinematischer wie elektrischer Hinsicht durch eine zentrale Steuerwelle gesteuert. Auf dieser Steuerwelle sind eine oder mehrere Kurvenscheiben angeordnet, deren äußere Konturen den Ablauf des Schweißprogramms steuern. So steuert bei Kettenschweißmaschinen im allgemeinen ein auf einer Kurvenscheibe abrollender, federbelasteter Hebel in Verbindung mit einem ebenen Getriebe den Vorschub der Elektroden und der die Längskräfte aufbringenden Stauchstähle. Synchron dazu betätigt eine weitere Kurve mit dem Umlauf der Steuerwelle die die Schweißspannung ein- und ausschaltenden Kontakte.

Diesem Prinzip einer starren Steuerung haftet der gravierende Nachteil an, daß die Qualität der Schweißverbindung negativ beeinflussende Störgrößen nicht ausgeglichen werden können. Zu diesen auf das Schweißergebnis Einfluß nehmenden Störgrößen gehören unter anderem Schwankungen der Netzspannung, ein sich beim Erwärmen ändernder Scheinwiderstand des Schweißtransformators, was wegen der resultierenden Änderung der Phasenverschiebung zwischen Schweißstrom und Schweißspannung eine geänderte Wirkschweißleistung nach sich zieht, und die sich von Mal zu Mal ändernden Übergangswiderstände zwischen den Schweißelektroden und dem Werkstück. Zu diesen gütemindernden Einflußgrößen gehören insbesondere auch die werkstückbedingten Störgrößen, also beispielsweise Form- und Werkstofftoleranzen der gebogenen Kettenglieder. Dem letztgenannten Umstand wurde bisher dadurch begegnet, daß an die gebogenen Kettenglieder in Hinsicht auf Maßhaltigkeit der Abmessungen und Konstanz der Werkstoffkennwerte sehr hohe Anforderungen gestellt wurden, was die Produktion solcher Ketten naturgemäß sehr verteuerte.

In der deutschen Auslegeschrift 24 57 180 ist des weiteren eine elektrische Widerstands-Stumpf- oder Abbrennschweißmaschine zum Verschweißen von Werkstücken mit stabförmigen Enden beschrieben, bei der der Schweißstrom eingeschaltet wird, wenn die auf die Stauchstähle wirkende Stauchkraft einen bestimmten Wert überschreitet. Nach dem Einschalten des Schweißstroms wird dieser Schweißstrom programmgesteuert und automatisch nach Beendigung des Programms abgeschaltet.

Bei einer in der US-Patentschrift 4 419 558 beschriebenen Punktschweißmaschine werden hingegen Elektroden mittels einer Feder, einschließlich der zu verschweißenden Bleche, gegeneinandergepreßt. Die Feder wird durch einen Stempel gespannt, der in seinem Weg durch einen Anschlag begrenzt ist. Wenn das Metall in den Schweißpunkten zwischen den Elektroden schmilzt, bewegen sich die Elektroden aufeinander zu, so daß die durch die Feder aufgebrachte Kraft kleiner wird. Diese Kraft wird mit einem Soll-Wert verglichen und der Schweißstrom abgeschaltet, wenn sie einen vorgegebenen Wert unterschreitet.

Der Erfindung liegt daher die Aufgabe zugrunde, eine Regelung zu schaffen, mit der sich der Einfluß der erwähnten Störgrößen zuverlässig eliminieren läßt.

Die Lösung der Aufgabe besteht darin, daß bei einem Verfahren der eingangs erwähnten Art erfindungsgemäß die an das Werkstück angelegte Schweißspannung in Abhängigkeit von den gemessenen Kräften geregelt wird. Bei Kettenschweißmaschinen werden diese Längskräfte von den sogenannten Stauchstählen aufgebracht und können an diesen gemessen werden.

Der Vorteil des erfindungsgemäßen Verfahrens liegt darin, daß die tatsächlichen Vorgänge in der Schweiße meßtechnisch erfaßt werden und daß sich wegen der indirekten Abhängigkeit der Schweißkräfte von der Wirkschweißleistung und damit von der Schweißspannung, ein geschlossener Regelkreis ergibt. Steigt zum Beispiel unter dem Einfluß von äußeren Störgrößen die in den Schweißspalt eingeleitete Wirkschweißleistung an, so steigt die Temperatur des Werkstückes, und damit sinkt die Festigkeit des Werkstoffs, was zu einem Abfallen der an den Stauchstählen gemessenen Kräfte führt. Aufgrund der niedrigen gemessenen Kräfte wird die Schweißspannung und damit die Wirkschweißleistung durch einen Regler zurückgenommen und damit der Einfluß der Störgröße kompensiert. Analog dazu führt ein Abfallen der Wirkschweißleistung zu einer Erhöhung der in den Stauchstählen gemessenen Kräfte, was durch ein Erhöhen der Schweißspannung ausgeglichen wird.

Das Werkstück wird vorteilhafterweise erst dann mit der Schweißspannung beaufschlagt, wenn die gemessenen Kräfte einen voreingestellten Schwellenwert überschreiten. Dieser Schwellenwert kann die untere Grenze eines Regelbereichs sein. Mit Annäherung der gemessenen Schweißkräfte an den etwa in der Mitte des Regelbereichs liegenden Kraftsollwert verstellt der Regler die Schweißspannung kontinuierlich von 0 auf den für das Kräftegleichgewicht zwischen Kettenglied und Stauchstählen erforderlichen Wert.

Durch diesen Kunstgriff lassen sich Abweichungen der Länge der gebogenen Kettenglieder ausgleichen. Ist etwa ein Kettenglied zu lang geraten, so berühren die Stauchstähle beim Vorfahren die Enden des Kettengliedes entsprechend früher, und dementsprechend früher wird, da die Schweißkräfte den Schwellenwert früher überschreiten, der Schweißvorgang eingeleitet. Bei einem zu kurz geratenen Kettenglied setzt der Schweißvorgang entsprechend später ein.

Allen Preßstumpfschweißverfahren gemeinsam ist, daß nach Ablauf einer bestimmten Erwärmungszeit der erwärmte Werkstoff am Schweißstoß gestaucht wird, indem die Stauchstähle weiter aufeinander zu verfahren werden. Wie weiter oben schon erwähnt, werden bei herkömmlichen Preßstumpfschweißmaschinen der elektrische und der kinematische Ablauf des Verfahrens durch eine zentrale Steuerwelle gesteuert. Da es bei dem erfindungsgemäßen Verfahren zu Phasenverschiebungen zwischen dem elektrischen und dem kinematischen Ablauf kommt, ist es wünschenswert, die Stauchphase nach Ablauf der Erwärmungszeit unabhängig von der augenblicklichen Stellung der Steuerwelle auszulösen. Hierzu wird die Erwärmungszeit mit einer elektronischen Uhr o. ä. gemessen, die beispielsweise gestartet wird, wenn die Schweißspannung zum ersten Mal einen bestimmten Wert überschreitet.

Das Einleiten der Stauchphase nach Ablauf der Erwärmungszeit wird mit einer Vorrichtung mit mehreren, ein von einer Steuerwelle über eine Kurvenscheibe angetriebenes Getriebe bildenden Hebeln und mindestens zwei von diesem Getriebe bewegten, das Werkstück mit Längskräften beaufschlagenden Bauteilen erfindungsgemäß dadurch kinematisch realisiert, daß der eine Hebel über eine zusätzliche bzw. zweite unabhängig angetriebene Kurvenscheibe mit einem sich an einer Stelle des Umfangs sprunghaft ändernden Radius mit dem auf der Kurvenscheibe ruhenden, federbelasteten Hebel gekuppelt ist. Ein Elektromagnet verdreht die zweite Kurvenscheibe dabei so um einen bestimmten Winkel, daß der auf der äußeren Kontur schleifende federbelastete Hebel seine Lage schlagartig ändert und die Stauchstähle mit der zusätzlichen Stauchkraft beaufschlagt werden. Nach Abschluß des Schweißvorgangs, d. h. wenn die Stauchstähle in ihre Ausgangsposition zurückfahren, wird diese Kurvenscheibe wieder in ihre Ausgangslage zurückgedreht.

Die Erfindung wird nachstehend anhand eines in der Zeichnung dargestellten Ausführungsbeispieles des näheren erläutert. In der Zeichnung zeigen:

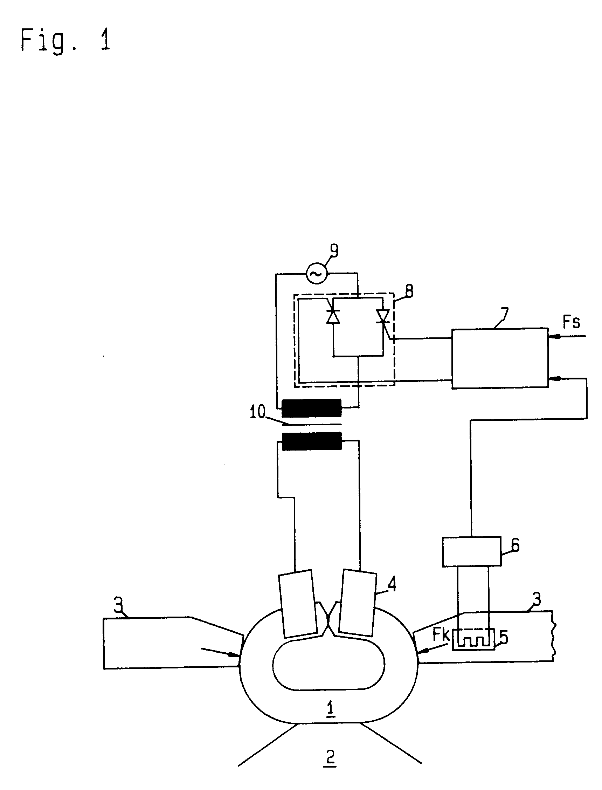

- Fig. 1: eine schematische Darstellung des elektrischen Teils und
- Fig. 2: eine schematische Darstellung des kinematischen Teils einer nach dem erfindungsgemäßen Verfahren arbeitenden Preßstumpfschweißmaschine.

Das auf dem Sattel 2 liegende Kettenglied 1 ist zwischen zwei Stauchstählen 3 eingespannt und wird über Elektroden 4 mit der Schweißspannung beaufschlagt. Mittels eines Dehnmeßstreifens 5 werden die von den Stauchstählen 3 auf das Kettenglied 1 ausgeübten Kräfte F_{K} gemessen und in Form eines elektrischen Signals an einen Meßverstärker 6 weitergegeben. Ein Regler 7 vergleicht das von dem Meßverstärker 6 abgegebene Signal mit einem Sollwert Fₛ und gibt Steuersignale an einen Thyristorstellkreis 8. Die von einer Wechselspannungsquelle 9 gelieferte Spannung wird von einem Schweißtransformator 10 auf die Schweißspannung transformiert. Der Regler 7 regelt über den Thyristorstellkreis 8 den effektiven Wert der Schweißspannung nach dem Phasenanschnittsverfahren; das gezeichnete Ausführungsbeispiel ist der besseren Übersichtlichkeit wegen einphasig ausgeführt. Weicht die gemessene Kraft von dem vorgegebenen Sollwert nach oben ab, so wird die Dauer der Ansteuerimpulse verlängert und umgekehrt.

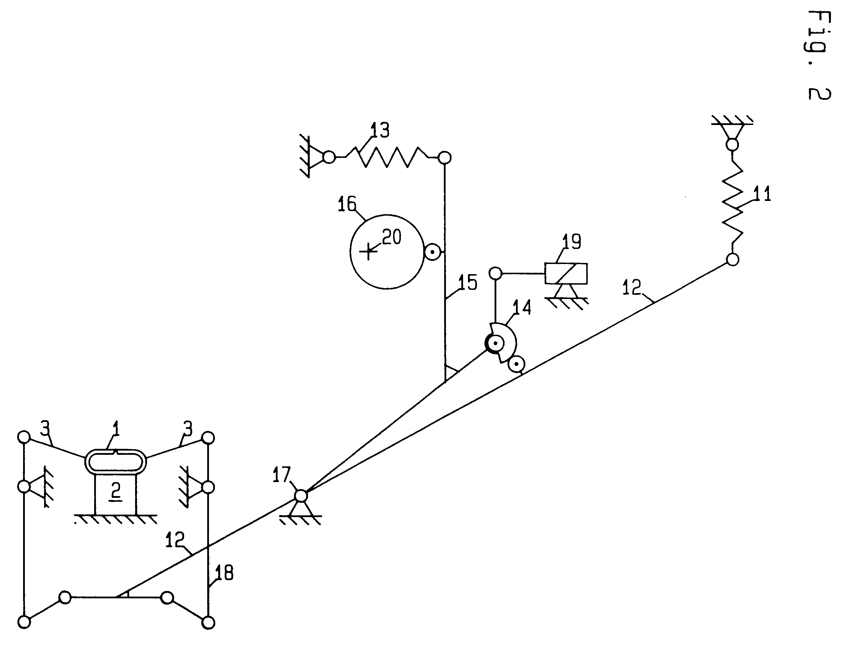

Der mechanische Aufbau der erfindungsgemäßen Vorrichtung ist in Fig. 2 dargestellt. Die Vorrichtung besteht aus dem Sattel 2, zwei Stauchstählen 3, zwei Zugfedern 11 und 13, zwei in einem Auflager 17 drehbar gelagerten Hebeln 12 und 15, zwei Kurvenscheiben 14 und 16, einem Elektromagnet 19, einer senkrecht zur Zeichenebene dargestellten Steuerwelle 20 und einem Hebelsystem 18.

Im folgenden wird der kinematische Ablauf des erfindungsgemäßen Verfahrens anhand von Fig. 2 erläutert.

Die Feder 11 zieht den Hebel 12 an, der, unterstützt durch die Feder 13, über die Kurve 14 den Hebel 15 an die auf der Steuerwelle 20 sitzende Kurvenscheibe 16 drückt. Mit dem Drehbeginn der Kurvenscheibe 16 zieht die Feder 11 den Hebel 12 weiter nach oben. Der Hebel dreht sich in seinem Auflager 17 und verfährt über das Hebelsystem 18 die Stauchstähle 3, die das Kettenglied zusammendrücken. In dem Kettenglied 1 baut sich dabei eine Längskraft auf, die in den Stauchstählen gemessen wird. Nach Überschreiten eines Schwellwertes wird der Schweißvorgang eingeleitet. Nach Ablauf der vorgegebenen Erwärmungszeit verstellt der Elektromagnet 19 die Kurvenscheibe 14 von ihrem großen Radius auf ihren kleinen. Der Hebel 12 wird durch die Feder 11 schlagartig angezogen, und über das Hebelsystem 18 werden die Stauchstähle 3 plötzlich verfahren und damit die Schweißzone des Kettengliedes 1 schlagartig gestaucht.

Mit dem Ende der Vorwärtsbewegung der Stauchstähle 3 ist die Umformung am Schweißstoß beendet. Der Schweißstrom wird ausgeschaltet. Mit dem Weiterdrehen der Kurvenscheibe 16 bewegt sich das gesamte Hebelsystem 18 in seine Ausgangslage zurück, und die Kurvenscheibe 14 wird wieder von ihrem kleinen Radius auf ihren großen zurückgestellt.

## Patentansprüche

1. Preßstumpfschweißverfahren, insbesondere für aus Runddraht gebogene Kettenglieder, bei dem das zu verschweißende Werkstück (1) mittels durch Steuerkurven (14, 16) gesteuert bewegter Stauchstähle (3) gepreßt und die auf das Werkstück (1) in seiner Längsrichtung ausgeübten Preßkräfte gemessen werden, dadurch gekennzeichnet, daß die an das Werkstück (1) angelegte Schweißspannung in Abhängigkeit von den gemessenen Kräften geregelt wird.

2. Verfahren nach Anspruch 1, dadurch gekennzeichnet, daß die Schweißspannung eine Wechselspannung ist und in Abhängigkeit von den gemessenen Kräften nach dem Prinzip des Phasenanschnitts verstellt wird.

3. Verfahren nach Anspruch 1 oder 2, dadurch gekennzeichnet, daß das Werkstück erst dann mit der Schweißspannung beaufschlagt wird, wenn die gemessenen Kräfte einen Schwellwert überschreiten.

4. Verfahren nach einem der Ansprüche 1 bis 3, dadurch gekennzeichnet, daß die an das Schweißgut angelegte Schweißspannung in Abhängigkeit von den gemessenen Kräften mittels eines Reglers so verstellt wird, daß die auf das Werkstück in seiner Längsrichtung ausgeübten Kräfte auf einem Sollwert konstant gehalten werden.

5. Verfahren nach Anspruch 3 oder 4, dadurch gekennzeichnet, daß nach Ablauf einer voreingestellten Erwärmungszeit die Stauchphase eingeleitet wird.

6. Vorrichtung zur Durchführung des Verfahrens nach Anspruch 5, mit mehreren, ein von einer Steuerwelle (20) über eine Kurvenscheibe (16) angetriebenes Getriebe bildenden Hebeln (12, 15, 18) und mindestens zwei von diesem Getriebe bewegten, das Werkstück mit Längskräften beaufschlagenden Bauteilen (3), dadurch gekennzeichnet, daß der Hebel (15) über eine zusätzliche (bzw. zweite) unabhängig angetriebene Kurvenscheibe (14) mit einem sich an einer Stelle des Umfangs sprunghaft ändernden Radius mit dem auf der Kurvenscheibe (14) ruhenden, federbelasteten Hebel (12) gekuppelt ist.

## Claims

1. A pressure butt welding process, particularly for chain links bent from round wire, in which the workpiece (1) to be welded is pressed by upsetting tools (3) controlled by control cams (14, 16) and the pressure forces exerted on the workpiece (1) in its longitudinal direction are measured, characterised in that the welding voltage applied to the workpiece (1) is controlled in dependence on the measured forces.

2. A process according to claim 1, characterised in that the welding voltage is an alternating voltage and is adjusted in dependence on the measured forces according to the phase control principle.

3. A process according to claim 1 or claim 2, characterised in that the workpiece only has the welding voltage applied to it when the measured forces exceed a threshold value.

4. A process according to any one of claim 1 to 3, characterised in that the welding voltage applied to the welding deposit in dependence on the measured forces is adjusted by a control means so that the forces exerted on the workpiece in its longitudinal direction are maintained constant at an intended value.

5. A process according to claim 3 or claim 4, characterised in that after the end of a preset heating-up period the upsetting phase is initiated.

6. An apparatus for carrying out the process according to claim 5, comprising a plurality of levers (12, 15, 18) making up a transmission driven by a control shaft (20) by way of a cam disc (16) and at least two members (3) movable by this transmission that exert longitudinal forces on the workpiece, characterised in that the lever (15) is coupled, by way of an additional (or, as the case may be, second) independently driven cam disc (14) having an abrupt change in its radius at a point on its circumference, with the spring-loaded lever (12) resting on the cam disc (14).

## Revendications

1. Procédé de soudage bout à bout par compression, notamment pour le soudage de maillons de chaîne en fil rond courbé, dans lequel la pièce à souder (1) est comprimée par des éléments de refoulement (3) commandés en fonction de courbes de commande (14, 16), et dans lequel on mesure les forces de compression qui agissent dans la direction longitudinale de la pièce (1),
caractérisé en ce qu'on règle la tension de soudage appliquée à la pièce (1) en fonction des forces mesurées.

2. Procédé selon la revendication 1,
caractérisé en ce que la tension de soudage est une tension alternative, réglée en fonction des forces mesurées selon le principe de la coupure de phase.

3. Procédé selon la revendication 1 ou 2,
caractérisé en ce qu'on n'applique la tension de soudage à la pièce que lorsque les forces mesurées dépassent une valeur de seuil.

4. Procédé selon l'une des revendications 1 à 3,
caractérisé en ce qu'on règle la tension de soudage appliquée à la pièce à souder, en fonction des forces mesurées à l'aide d'un régulateur de telle sorte que les forces qui agissent dans la direction longitudinale de la pièce sont maintenues constantes à une valeur de consigne.

5. Procédé selon la revendication 3 ou 4,
caractérisé en ce qu'on démarre l'étape de refoulement après une période d'échauffement préréglée.

6. Dispositif pour la mise en oeuvre du procédé selon la revendication 5, comportant plusieurs leviers (12, 15, 18) constituant un organe de transmission entrainé par un arbre de commande (20) via une came (16), et au moins deux éléments (3) mis en mouvement par cet organe de transmission, qui exercent les forces longitudinales sur la pièce,
caractérisé en ce que le levier (15) est couplé via une came (14) supplémentaire (ou une deuxième came) entraînée de façon indépendante et présentant un rayon qui varie brusquement à un endroit du périmètre, au levier (12) soumis à l'effet d'un ressort et reposent sur la came (14).
